# DEMANDE DE BREVET EUROPEEN

(11) **EP 2 106 967 A1**
(43) Date de publication de la demande: **07.10.2009**
(21) Numéro de dépôt: 09157097.8
(22) Date de dépôt: 01.04.2009
(51) Int. Cl.: B60P 1/28

(54) **Benne pour la récupération de rebuts de béton**

(30) Priorité: 02.04.2008 FR 0852173
(71) Demandeur: Societe Bernard Desgranges, 71960 Verze (FR)
(72) Inventeur: Desgranges, Bernard, 71960, VERZE (FR)
(74) Mandataire: Thibault, Jean-Marc

(57) **Abrégé**

L'invention concerne une benne pour la récupération de rebuts de béton qui après durcissement forment un bloc béton, la benne comportant un châssis pourvu d'un fond (**5**) prolongé de part et d'autre par des parois longitudinales (**6**) raccordées à une paroi avant (**7**) et à une paroi arrière mobile (**8**) formant une porte de déchargement, le châssis étant pourvu d'une structure de préhension (**11**) pour un bras de levage et de manutention adapté pour déplacer la benne entre une position à plat et une position inclinée de déchargement du bloc béton,
Selon l'invention, une partie du fond (**5**) de la benne est découpée partiellement pour former un volet mobile (**16**) vers l'intérieur de la benne pour assurer le décollement du bloc béton par rapport à la benne, le volet mobile (**16**) étant déplacé vers l'intérieur de la benne, lorsque la benne occupe la position à plat, par l'intermédiaire d'un dispositif de manoeuvre assurant le maintien du volet dans ladite position jusqu'au déchargement du bloc béton.

## Description

La présente invention concerne le domaine technique de la récupération des déchets ou des rebuts de béton dans une benne afin d'être recyclés après durcissement.

Dans le domaine technique ci-dessus, il apparaît le besoin de récupérer les rebuts de béton provenant par exemple d'un volume trop important par rapport aux besoins ou à un changement des caractéristiques mécaniques du béton.

Dans l'état de la technique, de nombreuses solutions techniques ont été proposées pour récupérer les rebuts de béton. Par exemple, le brevet US 6 413 036 a proposé un véhicule muni d'une benne basculante aménagée pour présenter une forme tronconique qui s'évase de sa partie avant jusqu'à sa partie arrière. Cette forme tronconique de la benne facilite le glissement du bloc béton vers la partie arrière de la benne. Toutefois, il s'avère dans de nombreux cas, impossible d'obtenir le décollement du bloc béton par rapport de la benne lors de l'opération de basculement de la benne.

Pour tenter de remédier à cet inconvénient, le brevet US 7 232 189 décrit une benne pour la récupération de rebuts de béton comportant une structure de préhension pour un bras de levage et de manutention portée par un véhicule. La benne comporte une paroi avant mobile qui est déplacée vers l'intérieur de la benne lors de l'opération de basculement visant le déchargement du bloc béton. Le déplacement de la paroi avant vise à assurer le décollement du bloc béton par rapport à la benne favorisant son glissement lors de l'opération de déchargement.

Il est à noter que l'opération de décollement du bloc béton est réalisée lors de l'opération de déchargement du bloc béton de sorte que la benne et le bloc béton sont solidaires lors du transport. Il s'ensuit que la benne ne peut pas se déformer à la suite des contraintes mécaniques qu'elle subit lors du roulement du véhicule. De plus, l'opération de décollement du bloc béton par rapport à la benne ne peut pas être assurée à coup sûr.

La présente invention vise donc à remédier aux inconvénients énoncés ci-dessus en proposant une nouvelle benne de récupération des rebuts de béton, adaptée pour assurer après durcissement, le décollement à coup sûr du béton par rapport à la benne, cette benne étant conçue pour présenter un entretien réduit et une grande longévité d'utilisation.

Pour atteindre un tel objectif, la benne pour la récupération de rebuts de béton qui après durcissement forment un bloc béton, comporte un châssis pourvu d'un fond prolongé de part et d'autre par des parois longitudinales raccordées à une paroi avant et à une paroi arrière mobile formant une porte de déchargement, le châssis étant pourvu d'une structure de préhension pour un bras de levage et de manutention adapté pour déplacer la benne entre une position à plat et une position inclinée de déchargement du bloc béton.

Selon l'invention, une partie du fond de la benne est découpée partiellement pour former un volet mobile vers l'intérieur de la benne pour assurer le décollement du bloc béton par rapport à la benne, le volet mobile étant déplacé vers l'intérieur de la benne, lorsque la benne occupe la position à plat, par l'intermédiaire d'un dispositif de manoeuvre assurant le maintien du volet dans ladite position jusqu'au déchargement du bloc béton.

Avantageusement, le volet mobile est formé par une partie de fond de la benne située à proximité de la paroi avant de la benne.

Selon une caractéristique de l'invention, le dispositif de manoeuvre comporte un levier d'actionnement articulé sur le châssis et adapté pour être déplacé vers l'intérieur de la benne par le bras de levage, lors de la préhension de la benne et son chargement sur un véhicule de transport.

Selon l'invention, le volet mobile est maintenu lorsque le levier d'actionnement est au repos, sensiblement dans le plan du fond, par l'intermédiaire de butées.

Selon une autre caractéristique de l'invention, le châssis comporte une structure d'appui pour positionner la benne dans une position à plat de chargement, dans laquelle le levier d'actionnement est au repos.

Avantageusement, la benne comporte une forme tronconique s'évasant de la paroi avant vers la paroi arrière pour favoriser le glissement du bloc béton.

Selon l'invention, le châssis est pourvu d'un pare-choc arrière muni de galets s'étendant sensiblement dans le prolongement du fond de la benne pour favoriser le déchargement du bloc béton.

Un autre objet de l'invention est de proposer un ensemble pour la récupération de rebuts de béton comportant un véhicule muni d'un châssis et d'un bras de levage et de manutention pour une benne, adapté pour placer la benne dans une position à plat sur la plate forme, en assurant automatiquement le déplacement du volet mobile du fond de la benne vers l'intérieur de la benne afin d'obtenir le décollement du bloc béton.

Un autre objet de l'invention est de proposer un procédé de récupération de rebuts de béton placés dans une benne destinée à être déplacée par un véhicule muni d'un bras de levage et de manutention.

Selon l'invention, le procédé comporte les étapes suivantes :
- récupérer les rebuts de béton dans la benne,
- après durcissement des rebuts de béton, assurer le décollement du bloc béton par rapport à la benne,
- et assurer le transport de la benne en maintenant le bloc béton décollé par rapport à la benne.

Selon une caractéristique préférée de réalisation, le procédé consiste à assurer automatiquement, par le bras de levage et de manutention, le décollement du bloc béton, lors du chargement de la benne sur le véhicule.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective montrant une benne conforme à l'invention.
La **Figure 2** est une vue de dessous de la benne illustrée à la **Fig. 1****.**
La **Figure 3** est une vue arrière de la benne illustrant sa section droite transversale.
Les **Figures 4** et **5** sont des vues en coupe longitudinale de la benne selon l'invention en position respectivement de repos et de décollement du bloc de béton.

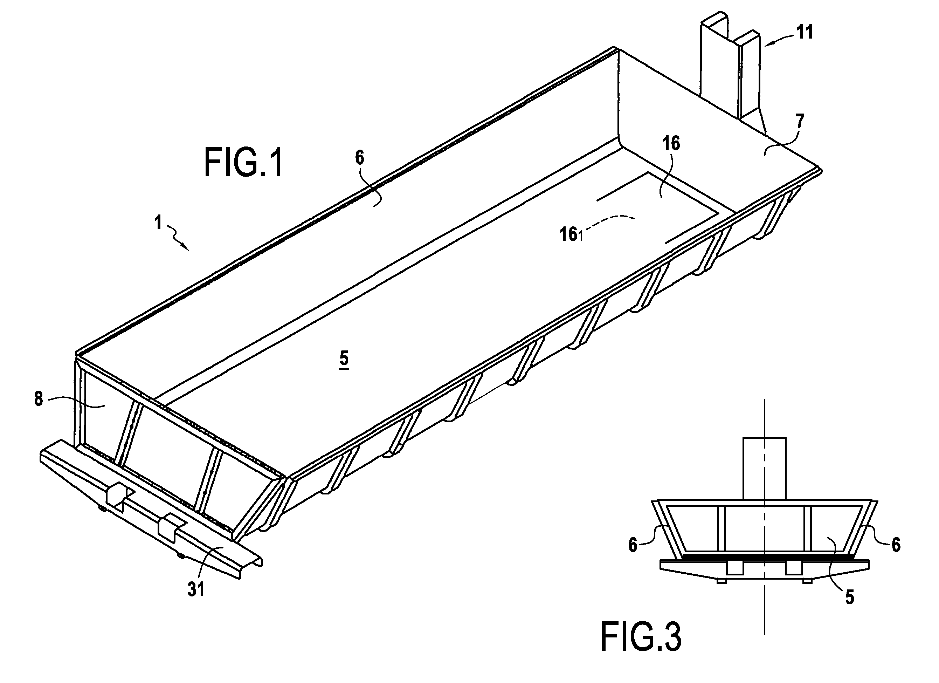

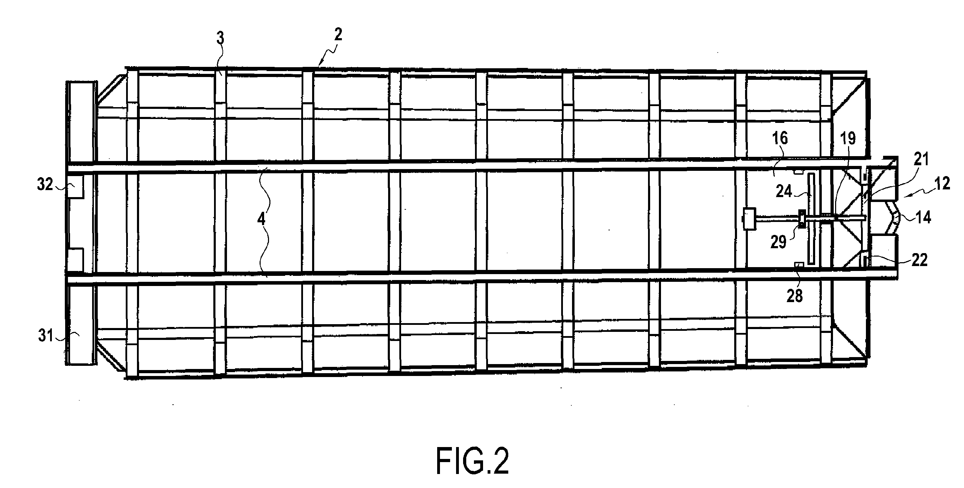

Tel que cela ressort plus précisément des **Fig. 1** et **2**, l'objet de l'invention concerne une benne 1 pour la récupération de rebuts ou de déchets de béton qui après durcissement forme un bloc de béton.

La benne **1** comporte un châssis **2** réalisé de toute manière appropriée. Par exemple, le châssis **2** comporte une série de membrures **3** fixées sur deux longerons **4** s'étendant dans le sens longitudinal de la benne **1**. Le châssis **2** assure la fixation pour un fond plat **5** prolongé de part et d'autre, par des parois longitudinales **6** raccordées à une paroi avant **7** et à une paroi arrière mobile **8**. Avantageusement, la paroi arrière **8** forme une porte de déchargement du bloc de béton et se trouve articulée sur une extrémité d'un bord longitudinal. L'articulation et les moyens de fermeture et d'ouverture de la paroi arrière peuvent être réalisés de toute manière appropriée connue de l'homme du métier. Selon une variante préférée de réalisation, la paroi arrière **8** est articulée sur un pivot monté sur des roulements à billes. De manière classique, la benne **1** est destinée en position à plat, à reposer sur une structure de réception **9** telle une assise en béton aménagée sur un site de récupération ou le châssis d'un véhicule, comme cela sera expliqué dans la suite de la description.

Tel que cela ressort plus précisément de la **Fig. 3****,** les deux parois longitudinales **6** s'étendent de manière inclinée en dépouille par rapport au fond **5** de sorte que la benne présente en section droite transversale, une forme tronconique avec la petite base du tronc de cône correspondant au fond plat **5.** Avantageusement, les parois longitudinales **6** sont reliées au fond plat **5** par un congé arrondi. De même, les parois avant **7** et arrière **8** sont inclinées vers l'avant selon le sens longitudinal de la benne. Il est à noter que la forme inclinée de la porte arrière **8** est adaptée pour faciliter le dégagement du bloc de béton lors de l'opération de déchargement.

Selon une caractéristique de l'invention, la benne **1** présente dans le sens longitudinal une forme tronconique s'évasant de la paroi avant **7** vers la paroi arrière **8.** En d'autres termes, la largeur de la benne prise au niveau de la paroi avant **7** est inférieure à la largeur prise au niveau de la paroi arrière **8.** Cette forme tronconique permet de favoriser le glissement du bloc béton dans le sens longitudinal. Selon une caractéristique préférée de réalisation, la benne est réalisée en un matériau tel qu'une tôle en acier de construction résistant à l'abrasion et à la corrosion.

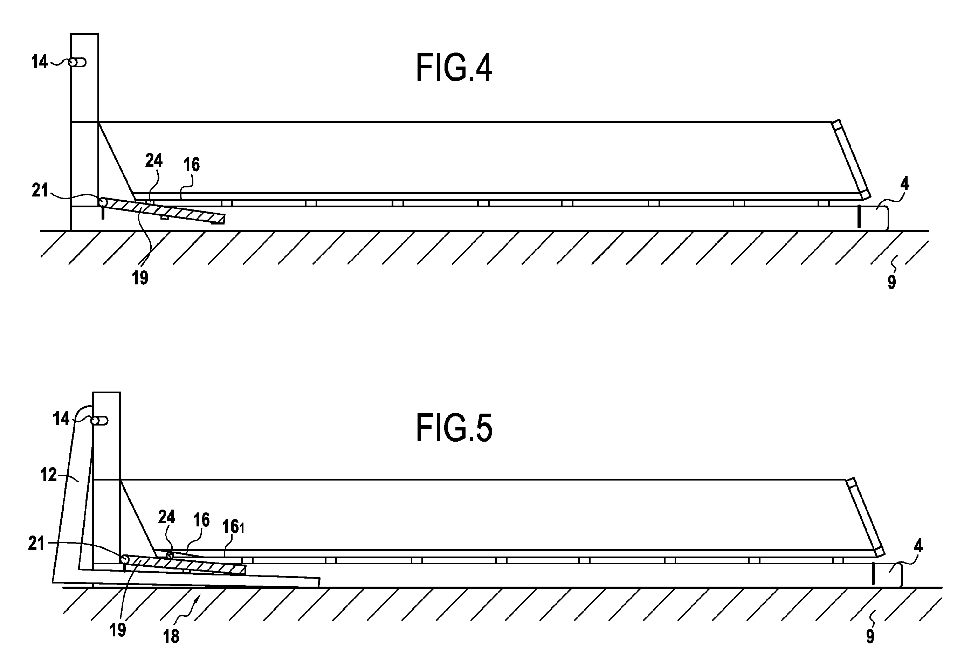

La benne 1 est pourvue d'une structure de préhension 11 par un bras de levage et de manutention 12 (Fig. 5) équipant un véhicule de transport tel qu'un camion à ampliroll non représenté mais connu en soi. Cette structure de préhension 12 comporte une potence fixée sur les extrémités des longerons 4 en s'élevant au-dessus de la paroi avant 7 et en présentant un axe 14 d'accrochage pour le bras de levage et de manutention 12.

De manière classique, la benne 1 qui repose à plat est destinée à être remplie par des rebuts de béton qui après durcissement forme un bloc béton compact. La benne 1 est alors chargée à l'aide du bras de levage et de manutention 12 pour être placée à plat sur le châssis du véhicule pour son transport vers le lieu de déchargement. Sur le site de déchargement, le bras de levage et de manutention 12 est piloté pour assurer le basculement de la benne en vue d'assurer le déchargement du bloc béton.

Conformément à l'invention, une partie du fond 5 est découpée partiellement pour former un volet mobile 16 adapté pour s'étendre en saillie à l'intérieur du volume interne de la benne pour assurer le décollement du bloc béton par rapport à la benne. Tel que cela ressort plus précisément de la Fig. 1, le volet présente une forme sensiblement rectangulaire en étant découpé sur trois de ses côtés de sorte qu'il reste attaché au fond 5 par un côté **16₁**. Il doit être considéré que le côté **16₁** forme ainsi un axe d'articulation ou de pivotement pour le volet mobile 16. De préférence, le côté opposé au côté **16₁** formant articulation est aménagé pour s'étendre à proximité de la paroi avant 7. Le volet mobile 16 est ainsi aménagé dans le fond 5 à proximité de la paroi avant 7.

Le volet mobile 16 est déplacé par l'intermédiaire d'un dispositif de manoeuvre **18** entre une position dite de repos dans laquelle le volet mobile 16 s'étend sensiblement dans le plan ou dans le prolongement du fond 5 (Fig. 4) et une position saillante (Fig. 5) dans laquelle le volet mobile s'étend à l'intérieur de la benne. Dans cette position saillante, le volet est incliné de quelques degrés par rapport au plan formé par le reste du fond 5.

Selon une caractéristique avantageuse de réalisation, le dispositif de manoeuvre **18** comporte un levier d'actionnement **19** muni à une extrémité d'un axe d'articulation 21 monté tournant sur des paliers 22 portés par le châssis 2. De préférence, le levier 19 n'agit pas ponctuellement sur le volet mobile 16 mais sur une surface à l'aide d'une barre d'appui 24.

Selon une caractéristique avantageuse de réalisation, le levier 19 est déplacé par le bras de levage 12, entre des positions dites de repos et d'actionnement correspondant respectivement aux positions de repos et saillante du volet mobile 16. En effet, de manière connue, le bras de levage et de manutention 12 est destiné à venir s'établir entre le fond 5 de la benne 1 et le châssis 9 du véhicule (Fig. 5). Ainsi, lors de l'opération de chargement sur le véhicule, le bras de levage et de manutention 12 est adapté pour assurer lors de sa course finale, un effort de poussée sur le levier 19 qui pivote pour assurer simultanément le pivotement du volet mobile **16** vers l'intérieur de la benne.

Il est à noter que le volet mobile 16 reste dans sa position saillante pendant tout le transport de la benne par le véhicule car le bras de levage et de manutention 12 est bloqué par le bras de levage 12 en appui sur le châssis 9 du véhicule.

Il est à noter que le basculement du levier 19, c'est-à-dire le passage de sa position de repos à sa position d'actionnement, est effectué automatiquement lors de l'opération de prise en charge de la benne sur le véhicule. Bien entendu, il est à noter que le déplacement du volet mobile 16 peut être effectué de manière différente. Par exemple, il peut être envisagé de déplacer le volet mobile par l'intermédiaire par exemple d'un vérin hydraulique.

Selon une autre caractéristique de l'invention, il est à considérer que le châssis 2 de la benne comporte une structure d'appui pour positionner la benne dans une position à plat de chargement dans laquelle le levier d'actionnement 19 est au repos. Par exemple, cette structure d'appui est réalisée par les longerons 4 qui, lorsqu'ils reposent sur la structure de réception 9, permettent au levier 19 d'occuper sa position de repos. Dans cette position à plat de la benne, le levier 19 occupe sa position de repos de sorte que le volet mobile 16 s'étend sensiblement dans le plan du fond 5 de la benne. Dans cette position du volet mobile, la benne est étanche et permet de recevoir les rebuts de béton.

Selon une autre caractéristique de réalisation, le volet mobile 16 est maintenu dans la position de repos lorsque le levier 19 est au repos par des butées 28 sur lesquelles vient en appui le volet mobile 16 lorsqu'il passe de sa position saillante à sa position de repos. De préférence, le volet mobile 16 est ramené à sa position de repos par l'intermédiaire de la barre d'appui 24 qui est engagée à l'intérieur d'un étrier 29 fixé sur la face inférieure ou externe du volet mobile 16. L'abaissement du levier conduit à assurer une traction sur le volet mobile 16 qui vient alors en appui sur ces butées 28 pour occuper sa position de repos.

Selon une caractéristique avantageuse, le châssis 2 est pourvu d'un pare-choc arrière 31 muni de galets ou de tambours 32 s'étendant sensiblement dans le prolongement du fond de la benne pour favoriser le déchargement du bloc béton.

Il ressort de la description qui précède que la benne 1 est particulièrement adaptée pour permettre la récupération des rebuts de béton tout en étant de conception simple. A cet égard, la réalisation du volet mobile 16 directement dans le fond 5 de la benne conduit à assurer un décollement du bloc béton après durcissement, tout en garantissant une étanchéité lors du versement des rebuts de béton dans la benne.

Il doit être noté également que la benne 1 avec le véhicule constitue un ensemble adapté pour assurer le décollement facile et automatique du bloc béton avant son transport. Ce décollement est assuré automatiquement par le bras de levage et de manutention 12 lors du chargement de la benne sur le véhicule. Ce décollement du bloc béton par rapport à la benne est donc effectué avant l'opération de transport du bloc béton, ce qui permet à la benne 1 de pouvoir subir des microdéformations consécutives au roulement du véhicule.

L'invention n'est pas limitée aux exemples décrits et représentés car diverses modifications peuvent y être apportées sans sortir de son cadre.

## Revendications

1. Benne pour la récupération de rebuts de béton qui après durcissement forment un bloc béton, la benne comportant un châssis (2) pourvu d'un fond (5) prolongé de part et d'autre par des parois longitudinales (6) raccordées à une paroi avant (7) et à une paroi arrière mobile (8) formant une porte de déchargement, le châssis étant pourvu d'une structure de préhension (11) pour un bras de levage et de manutention (12) adapté pour déplacer la benne entre une position à plat et une position inclinée de déchargement du bloc béton,
**caractérisée en ce qu'**une partie du fond (5) de la benne est découpée partiellement pour former un volet mobile (16) vers l'intérieur de la benne pour assurer le décollement du bloc béton par rapport à la benne, le volet mobile (16) étant déplacé vers l'intérieur de la benne, lorsque la benne occupe la position à plat, par l'intermédiaire d'un dispositif de manoeuvre (18) assurant le maintien du volet dans ladite position jusqu'au déchargement du bloc béton.

2. Benne selon la revendication 1, **caractérisée en ce que** le volet mobile (16) est formé par une partie de fond de la benne située à proximité de la paroi avant (7) de la benne.

3. Benne selon la revendication 1, **caractérisée en ce que** le dispositif de manoeuvre (**18**) comporte un levier d'actionnement (**19**) articulé sur le châssis et adapté pour être déplacé vers l'intérieur de la benne par le bras de levage (12), lors de la préhension de la benne et son chargement sur un véhicule de transport.

4. Benne selon la revendication 3, **caractérisée en ce que** le volet mobile (16) est maintenu lorsque le levier d'actionnement (19) est au repos, sensiblement dans le plan du fond, par l'intermédiaire de butées (28).

5. Benne selon la revendication 3 ou 4, **caractérisée en ce que** le châssis (2) comporte une structure d'appui pour positionner la benne dans une position à plat de chargement, dans laquelle le levier d'actionnement (19) est au repos.

6. Benne selon l'une des revendications 1 à 5, **caractérisée en ce que** la benne (1) comporte une forme tronconique s'évasant de la paroi avant vers la paroi arrière pour favoriser le glissement du bloc béton.

7. Benne selon l'une des revendications 1 à 6, **caractérisée en ce que** le châssis (2) est pourvu d'un pare-choc (31) arrière muni de galets (32) s'étendant sensiblement dans le prolongement du fond de la benne pour favoriser le déchargement du bloc béton.

8. Ensemble pour la récupération de rebuts de béton, **caractérisé en ce qu'**il comporte un véhicule muni d'un châssis et d'un bras de levage et de manutention (12) pour une benne (1) conforme à l'une des revendications 1 à 7, adapté pour placer la benne dans une position à plat sur la plate forme, en assurant automatiquement le déplacement du volet mobile (16) du fond de la benne vers l'intérieur de la benne afin d'obtenir le décollement du bloc béton.

9. Procédé pour la récupération de rebuts de béton placés dans une benne (1) conforme à l'une des revendications 1 à 7 destinée à être déplacée par un véhicule muni d'un bras de levage et de manutention (12), **caractérisé en ce qu'**il comporte les étapes suivantes :
- récupérer les rebuts de béton dans la benne,
- après durcissement des rebuts de béton, assurer le décollement du bloc béton par rapport à la benne,
- et assurer le transport de la benne (1) en maintenant le bloc béton décollé par rapport à la benne.

10. Procédé selon la revendication 9, **caractérisé en ce qu'**il consiste à assurer automatiquement, par le bras de levage et de manutention (12), le décollement du bloc béton, lors du chargement de la benne sur le véhicule.
